# EUROPÄISCHE PATENTSCHRIFT

(11) **EP 1 186 746 B1**
(45) Veröffentlichungstag und Bekanntmachung des Hinweises auf die Patenterteilung: **30.11.2005**
(21) Anmeldenummer: 01117457.0
(22) Anmeldetag: 19.07.2001
(51) Int. Cl.: F01D 5/08, F01D 11/00

(54) **Vordralldüsenträger**
Swirl nozzle
Tuyère de tourbillonement

(30) Priorität: 06.09.2000 DE 10043906
(43) Veröffentlichungstag der Anmeldung: 13.03.2002
(73) Patentinhaber: Rolls-Royce Deutschland Ltd & Co KG, 15827 Dahlewitz (DE)
(72) Erfinder: Briesenick, Jan, 12437 Berlin (DE); Friedl, Winfried-Hagen, 12305 Berlin (DE)
(74) Vertreter: Weber, Joachim

(56) Entgegenhaltungen:
- EP-A- 1 111 189
- GB-A- 2 246 836
- US-A- 4 425 079
- US-A- 4 657 482
- US-A- 4 708 588
- US-A- 4 730 978
- US-A- 4 741 153
- US-A- 4 807 433
- US-A- 4 822 244
- US-A- 5 575 616

## Beschreibung

Die Erfindung betrifft einen Vordralldüsenträger für eine Fluggasturbine, mit einem Grundkörper, der mit einem Passsitz zur Lagerung des Vordralldüsenträgers an einem Hauptträger versehen ist und der mehrere Vordralldüsenreihen aufweist.

Es ist aus dem Stand der Technik bekannt, dass bei Fluggasturbinen für die Schaufelkühlung Verdichterluft in eine Vorscheibenkammer eingeleitet wird. Die Einleitung in die Vorscheibenkammer erfolgt über Vordralldüsen, die radial relativ weit außen in die Vorscheibenkammer münden. Die Mündung der Vordralldüsen liegt nahe der Luftzuführung für die Schaufelkühlung, sodass unter Nutzung einer großen Druckdifferenz Kühlluft zu den Schaufeln zugeführt werden kann. Es ist weiterhin bekannt, die Vordralldüsen schräg anzuordnen, um eine möglichst optimierte Kühlung zu erzielen.

Es ist weiterhin bekannt, die Vorscheibenkammer sowohl radial nach außen als auch insbesondere radial nach innen abzudichten, insbesondere um zu verhindern, dass von innen Luft oder Gase in die Vorscheibenkammer eintreten. Die Abdichtung erfolgt mittels üblicher Labyrinthdichtungen.

Bei den aus dem Stand der Technik bekannten Konstruktionen ist ein innerer Dichtungsträger thermisch frei beweglich und entkoppelt radial an einem Hauptträger gelagert. Die Zentrierung und Aufhangung erfolgt mittels radialer Speichen. Die hierdurch erzielte thermische Entkopplung dient zur Optimierung der Dichtung, insbesondere zur Optimierung des thermischen Verhaltens.

Die bekannte Konstruktion sieht weiterhin vor, dass der Vordralldüsenträger über einen Passsitz an dem Hauptträger gelagert und an diesem zentriert ist. Die axiale Sicherung des inneren Dichtungsträgers erfolgt mittels einer inneren Lücke des Vordralldüsenträgers.

Bei der bekannten Konstruktion ergibt sich ein relativ zerklüfteter, stufiger Kanal, der zu einem erhöhten Luftvolumen und zu erhöhter Reibung führt.

Bei den bekannten Konstruktionen ist zwar eine effektive Kühlung der Turbinen-Schaufel gewährleistet, die Luftzuführung über die Vordralldüsen führt jedoch dazu, dass der Hauptbereich der Turbinenscheibenvorderwand nicht optimal gekühlt werden kann. Durch die nicht optimale Ausnutzung der Kühlwirkung der zugeführten Kühlluft ergibt sich eine relativ hohe Temperatur der Turbinenscheibe. Dies wiederum führt zu einer Senkung der Lebensdauer der Turbinenscheibe.

Ein weiterer Nachteil ergibt sich hinsichtlich der Herstellungskosten. Der aus dem Stand der Technik bekannte Aufbau erfordert einen relativ hohen Fertigungsaufwand, der insgesamt unerwünscht ist.

Weiterhin ergibt sich sowohl ein erhöhtes Gewicht, als auch ein nicht unbeträchtlicher Montageaufwand.

Zudem kann eine ungenaue Speichenzentrierung der inneren Labyrinthdichtung auftreten. Der Grund liegt in der Spielbehaftung der Speichen. Hieraus kann ein erhöhter Leckagestrom durch die Labyrinthdichtung auftreten, der zu einer weiteren Temperaturerhöhung in der Vorscheibenkammer führt.

Die EP 1 111 189 A2 beschreibt einen Vordralldüsenträger, bei welchem ein separates, radial innenliegendes Bauteil vorgesehen ist, um zusätzliche Sekundärvordralldüsen vorzusehen. Hierdurch wird eine relativ große, zerklüftete Vorscheibenkammer gebildet, in welcher sich starke Luftverwirbelungen bilden können, so dass insgesamt die Kühlung nicht unter allen Betriebsbedingungen optimal erfolgen kann.

Aus der US-A-4 708 588 ist eine Vorscheibenkammerkonstruktion vorbekannt, bei welcher eine zusätzliche Kammer vorgeschaltet ist, in welche zunächst die Kühlluft eingeleitet wird. Die eigentliche Vorscheibenkammer wird hierbei nicht gekühlt.

Auch bei der US-A-4 657 482 liegen mehrere Kammern vor, die unterschiedlich durchströmt werden, wobei ähnlich einem Lochblech eine Vielzahl von Ausströmöffnungen für Kühlluft vorgesehen sind, die jedoch nicht wie eine Vordralldüse wirken. Hierdurch ergibt sich keine optimale Kühlluftführung.

Eine ähnliche Konstruktion zeigt die US-A-5 575 616. Auch hierbei erfolgt die Lufteinströmung lediglich durch einen schlitzartigen Auslass, der zu einer Verwirbelung und Verteilung der Luft führt, wobei ein Teil der Kühlluft den Schaufeln zugeleitet wird.

Die Zuführung von Kühlluft in eine Vor-Vorkammer zeigt auch die US-A-4 807 433. Auch hierbei sind nicht mehrere Reihen von Vordralldüsen vorgesehen. Die Luftführung dient nicht primär der Kühlung der Vorscheibenkammer und damit der Scheibenvorderseite, sondern der Luftzuführung in die Schaufeln selbst.

Eine weitere Konstruktion ist aus der GB-A-2 246 836 bekannt. Die Luftzufuhr erfolgt nicht in eine Vorscheibenkammer zur Kühlung einer Scheiben-Vorderseite, sondern gezielt so, dass die Luft in die Schaufeln einströmen kann.

Aus der US-A-4 822 244 ist eine zerklüftete Zwischenkammer bekannt, welche nicht eine Vorscheibenkammer zur Kühlung einer Scheiben-Vorderseite bildet.

Aus der US-A-4 730 978 ist eine zerklüftete Vorscheibenkammer bekannt, in welche Kühlluft lediglich aus einer Düsenreihe eingeführt wird.

Die US-A-4 741 153 zeigt eine Konstruktion, bei welcher keine Düsen vorgesehen sind, sondern lediglich lochblechartige Ausnehmungen, durch welche Luft einströmen kann. Eine gezielte Drallaufbringung ist nicht vorgesehen.

Die US-A-4 425 079 zeigt eine weitere Konstruktion, bei welcher ein Haupt-Volumenstrom der Kühlluft direkt den Schaufeln zugeführt wird, während lediglich eine Teilmenge durch eine Reihe von Düsen einer Vorscheibenkammer zur Kühlung der Scheiben-Vorderseite zugeführt wird.

Der Erfindung liegt die Aufgabe zugrunde, einen Vordralldüsenträger zu schaffen, welcher bei einfachem Aufbau und einfacher, kostengünstiger Herstellung und Montage eine effektive Kühlung sowohl der Turbinenschaufeln als auch der Turbinenscheiben-Vorderwand ermöglicht.

Erfindungsgemäß wird die Aufgabe durch die Merkmale des Hauptanspruchs gelöst, die Unteransprüche zeigen weitere vorteilhafte Ausgestaltungen der Erfindung.

Der erfindungsgemäße Vordralldüsenträger zeichnet sich durch eine Reihe erheblicher Vorteile aus.

Da der Grundkörper radial nach innen verlängert ist, ist es möglich, an seinem radial inneren Bereich sowohl einen inneren Dichtungsbereich vorzusehen, als auch zusätzliche Sekundärvordralldüsen. Es ergibt sich somit eine einstückige Ausgestaltung, die insgesamt ein niedrigeres Gewicht aufweist, als die aus dem Stand der Technik bekannte zweiteilige Ausgestaltung. Durch die einteilige Ausgestaltung vermindert sich auch der Montageaufwand ganz erheblich, insbesondere da der innere Dichtungsbereich nicht mehr mittels Speichen aufgehängt werden muss.

Es ergibt sich zudem eine optimale Zentrierung des inneren Dichtungsbereichs, sodass dieser nurmehr verringerte Leckagestrome aufweist.

Durch die erfindungsgemäß vorgesehenen zusätzlichen Sekundärvordralldusen erfolgt eine wirkungsvolle Kühlung und damit Temperaturabsenkung an der Scheibenvorderwand. Hierdurch wird die Lebensdauer der Scheibe erhöht, ohne dass die Kühlung der Turbinenschaufeln selbst beeinträchtigt wäre.

In einer besonders günstigen Weiterbildung der Erfindung ist vorgesehen, dass der Grundkörper zur Bildung einer engen, glattwandigen Vorderscheibenkammer eine sich axial nach hinten zu einer Turbinenscheiben-Vorderwand erstreckende Wandung umfasst. Durch diese Ausgestaltung kann die Vorscheibenkammer mit einem sehr kleinen Volumen ausgebildet sein. Es befindet sich somit nur eine relativ geringe Luftmenge in der Vorscheibenkammer. Dies wirkt sich im Hinblick auf die physikalischen Vorgänge als besonders vorteilhaft aus. Der Vordralldüsenträger bildet während des Betriebes der Turbine ein statisches Bauteil, während sich die Turbinenscheibe mit hoher Drehzahl dreht. Durch Reibung wird die Luft in der Vorscheibenkammer erwärmt. Dies führt insgesamt zu einer Temperaturerhöhung in der Vorscheibenkammer. Je geringer jedoch das Volumen der Luft in der Vorscheibenkammer ist, desto günstiger gestalten sich die thermischen Verhältnisse. Es ergibt sich somit eine Reduktion der Verlustleistung bei kleiner werdendem Abstand zwischen dem Vordralldüsenträger (Stator) und der Turbinenscheibe (Rotor). Die Reibungsverluste in dem verringerten Volumen der Vorscheibenkammer können somit verringert werden, dies führt zu der Verringerung der Erwärmung des Luftvolumens.

Durch die erfindungsgemäße Ausgestaltung ergibt sich somit, im Gegensatz zum Stand der Technik, ein glattwandiger Kanal, welcher zusätzlich zu einer Reduzierung der Luftreibung beiträgt. Demgegenüber ist der Kanal im Stand der Technik zerklüftet und stufig, was wiederum zu einer Erhöhung der Reibung führt.

Besonders gunstig ist es daher, wenn die Wandung des Grundkörpers sich im Wesentlichen in einer radialen Ebene erstreckt und an ihrer zur Turbinenscheiben-Vorderwand weisenden Seite im Wesentlichen glatt ausgebildet ist. Es ergibt sich hierdurch ein enger, glatter Kanal, durch welchen die vorgedrallte Luft aus den Sekundärvordralldüsen strömt. Dies führt zu einer Verstärkung des Kühleffekts, insbesondere durch die geringeren Reibungsverluste. Des Weiteren wird die vorgedrallte Luft eng an der Scheibe gehalten.

In einer Weiterbildung der Erfindung ist vorgesehen, dass die Sekundärvordralldüsen radial nach innen und axial nahe zu der Turbinenscheiben-Vorderwand angeordnet sind. Daraus ergibt sich eine besonders effektive Zuleitung der Kühlluft, da ein großer Bereich der Scheiben-Vorderwand gekühlt werden kann, ebenso wie radial weiter innen liegende Bereiche.

Der innere Dichtungsbereich umfasst bevorzugterweise einen Dichtungsträger sowie eine Dichtung. Hieraus resultiert ein insgesamt optimierter Aufbau des Vordralldüsenträgers, der zu den bereits beschriebenen Vorteilen hinsichtlich der Montage- und/oder Herstellungskosten führt.

Die Vordralldüsen sind in günstiger Ausgestaltung der Erfindung zur Axialrichtung und/oder zu einer Radialebene schräg gestellt angeordnet, Gleiches gilt für die Sekundärvordralldüsen.

Um die Herstellungskosten weiter zu senken, kann es besonders vorteilhaft sein, wenn der Vordralldüsenträger als Gussteil ausgestaltet ist. Es ist dabei möglich, fast sämtliche der Flächen gusstechnisch so herzustellen, dass auf mechanische Nachbearbeitungen im Wesentlichen verzichtet werden kann. Auch die Vordralldüsen beziehungsweise die Sekundärvordralldüsen können dabei als gegossene Ausnehmungen hergestellt werden.

Die einstückige Ausgestaltung des Vordralldüsenträgers führt, bedingt durch die optimierten thermischen Verhältnisse, auch zu verbesserten Spannungszuständen bei dem gesamten Bauteil. Hierdurch erhöht sich die Lebensdauer, das Ausfallrisiko wird gesenkt. Durch entsprechende Auswahl der Materialien sowie der Wanddicken können die jeweiligen Ausdehnungskoeffizienten den Anforderungen in bestmöglicher Weise angepasst werden. Da der innere Dichtungsträger einstückig mit dem Grundkörper ausgebildet ist und somit auch über den Passsitz zentriert ist, ergibt sich eine bessere Zentrierung der inneren Labyrinthdichtung sowie eine Minimierung der Leckage.

Da der erfindungsgemäße Vordralldüsenträger mittels eines Passsitzes an dem Hauptträger gelagert ist, ergibt sich kein zusätzlicher Aufwand für Konstruktionsänderungen an dem Hauptträger. Auch dies ist ein wesentlicher Vorteil der erfindungsgemäßen Konstruktion.

Insgesamt ergibt sich somit unter Verwendung des erfindungsgemäßen Vordralldüsenträgers eine Kostenreduktion um circa 50 Prozent, verglichen mit den aus dem Stand der Technik bekannten Konstruktionen. Weiterhin resultiert eine entsprechende Gewichtsreduktion von circa 250 Gramm.

Im Folgenden wird die Erfindung anhand eines Ausführungsbeispiels in Verbindung mit der Zeichnung beschrieben. Dabei zeigt:
- Fig. 1: eine Teil-Schnittansicht eines Hauptträgers sowie einer Turbinenscheibe mit Turbinenschaufel sowie eine Schnittansicht eines Ausführungsbeispiels des erfindungsgemäßen Vordralldüsenträgers,
- Fig. 2: eine Teil-Seitenansicht des Vordralldüsenträgers, und
- Fig. 3: eine vereinfachte Schnittansicht durch den erfindungsgemäßen Vordralldüsenträger im Bereich einer Sekundärvordrallduse.

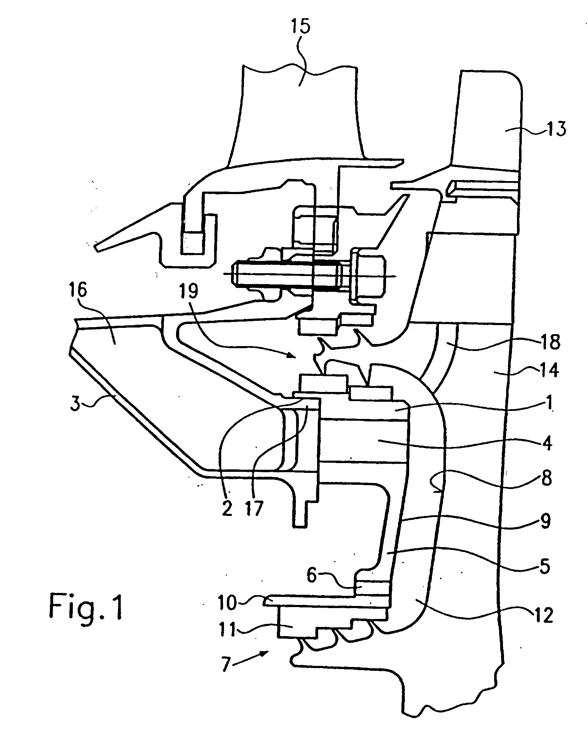

Die Fig. 1 zeigt in schematischer Darstellung einen Axialschnitt durch einen Teilbereich eines Hauptträgers 3, der mit einem Luftzuführkanal 16 versehen ist. Der Hauptträger 3 weist einen Lagerbereich 17 auf, der einen Passsitz 2 zur Lagerung eines im Wesentlichen kreisringförmigen Grundkörpers 1 hat.

Auf weitere konstruktive Details des Hauptträgers 3 braucht an dieser Stelle nicht eingegangen werden, da diese aus dem Stand der Technik bekannt sind. Dies gilt insbesondere für die entsprechenden Dichtungen sowie die Leitschaufel 15.

Weiterhin zeigt die Fig. 1 einen Teilschnitt einer Turbinenscheibe 14, welche um eine nicht dargestellte, im unteren Bereich der Fig. 1 horizontal verlaufende Drehachse drehbar ist. Die Turbinenscheibe 14 trägt eine Vielzahl von Turbinenschaufeln 13. Mittels Luftkanälen 18 wird Kühlluft, die über die Luftzuführkanäle 16 und noch zu beschreibende Vordralldüsen 4 zugeführt wird, den Turbinenschaufeln 13 zugeleitet.

Mittels des Passsitzes 2 ist erfindungsgemäß ein Grundkörper 1 des Vordralldüsenträgers an dem Hauptträger 3 gelagert. Eine Abdichtung des Grundkörpers 1 radial nach außen erfolgt mittels einer äußeren Dichtungsanordnung 19. Diese ist auch dem Stand der Technik ebenfalls bekannt, sodass auf eine detaillierte Beschreibung verzichtet werden kann.

Zwischen dem Grundkörper 1 und der Turbinenscheibe 14 wird eine schmale, kanalartige Vorscheibenkammer 12 ausgebildet. Diese wird begrenzt von einer sich im Wesentlichen in Radialrichtung erstreckenden, im Wesentlichen glatten Wandung 9 des Grundkörpers 1 sowie einer Turbinenscheiben-Vorderwand 8. Wie bereits erläutert, ist das Volumen der Vorscheibenkammer 12 erfindungsgemäß sehr gering.

Die Vordralldusen 4 sind schräggestellt angeordnet, um eine optimale Zuleitung von Kühlluft zu den Luftkanälen 18 sicherzustellen.

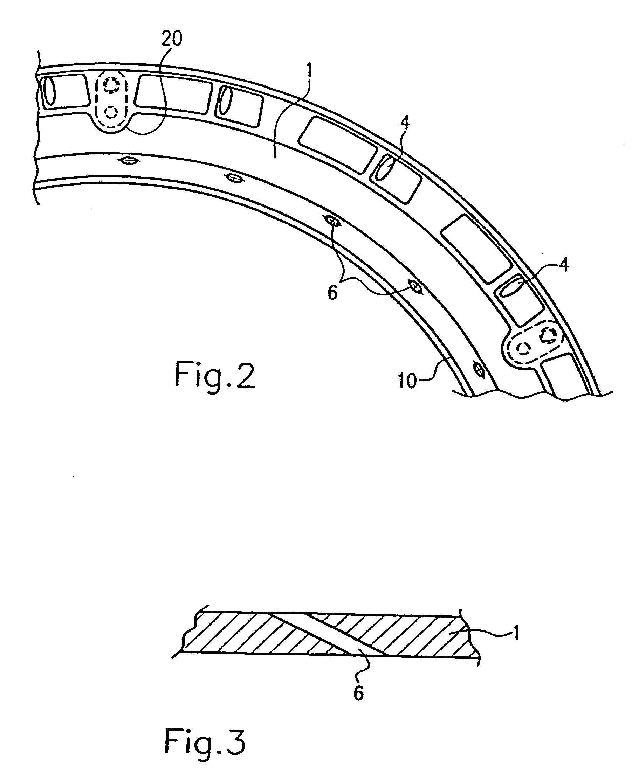

Der Grundkörper 1 weist einen radial inneren, wandartigen Bereich 5 auf, in welchem eine Vielzahl von Sekundärvordralldüsen 6 ausgebildet sind. Wie aus Fig. 3 ersichtlich, sind auch die Sekundärvordralldüsen 6 schräggestellt angeordnet.

An seinem radial inneren Bereich ist an dem Grundkörper 1 ein Dichtungsbereich 7 ausgebildet, der einen Dichtungsträger 10 sowie eine Dichtung 11 umfasst. Die Dichtung 11 ist ebenfalls aus dem Stand der Technik bekannt, sodass auf eine Beschreibung der konstruktiven Einzelheiten ebenfalls verzichtet werden kann.

Die Fig. 2 zeigt eine Teil-Seitenansicht des erfindungsgemäßen Vordralldüsenträgers. Vorsätzlich zu den Vordralldüsen 4 und den Sekundärvordralldüsen 6 sind Butzen 20 für Schrauben und/oder Gewinde zur Befestigung des Vordralldüsenträgers ausgebildet.

Die Erfindung ist nicht auf die gezeigten Ausführungsbeispiele beschränkt, vielmehr ergeben sich im Rahmen der Erfindung vielfältige Abwandlungs- und Modifikationsmöglichkeiten.

Dabei ist es erfindungsgemäß auch möglich, sowohl die Hauptals auch die Sekundärvordralldüsen in mehreren Richtungen oder Ebenen anzustellen. Beim Stand der Technik sind die Vordralldüsen lediglich in einer Richtung bzw. Ebene angestellt. Durch die erfindungsgemäße vorgesehene Möglichkeit ergibt sich auch eine bessere Kühlung von weiter innen liegenden Scheibenbereichen.

### Zusammenfassend ist Folgendes festzustellen:

Die Erfindung bezieht sich auf einen Vordralldüsenträger für eine Fluggasturbine, mit einem Grundkörper 1, der mit einem Passsitz 2 zur Lagerung des Vordralldüsenträgers an einem Hauptträger 3 versehen ist, und der mehrere Vordralldüsen 4 aufweist, dadurch gekennzeichnet, dass der Grundkörper 1 radial nach innen verlängert ausgebildet ist, an seinem radial inneren Bereich 5 mehrere Sekundärvordralldüsen 6 aufweist und an seiner inneren Radialseite mit einem inneren Dichtungsbereich 7 versehen ist.

## Patentansprüche

1. Vordralldüsenträger für eine Fluggasturbine, mit einem Grundkörper (1), der mit einem Passsitz (2) zur Lagerung des Vordralldüsenträgers an einem nicht rotierenden Hauptträger (3) versehen ist, und der mehrere Vordralldüsen (4) aufweist,
**dadurch gekennzeichnet,**
**dass** der Grundkörper (1) einstückig ausgestaltet ist und radial nach innen verlängert ausgebildet ist, an seinem radial inneren Bereich (5) mehrere Sekundärvordralldüsen (6) aufweist, die zusammen mit den Vordralldüsen (4) in eine gemeinsame Vorscheibenkammer (12) einströmen, wobei der Grundkörper an seiner inneren Radialseite mit einem inneren Dichtungsbereich (7) versehen ist, dass der Grundkörper (1) zur Bildung einer axial gering bemessenen glattwandigen Vorscheibenkammer eine sich zu einer Turbinenscheiben-Vorderwand (8) erstreckende Wandung (9) umfasst, welche sich im Wesentlichen in einer radialen Ebene erstreckt und an ihrer zur Turbinenscheiben-Vorderwand (8) weisenden Seite im Wesentlichen glatt ausgebildet ist, und dass die Sekundärvordralldüsen (6) radial innen und in einem geringen axialen Abstand von der Turbinenscheiben-Vorderwand (8) angeordnet sind.

2. Vordralldüsenträger nach Anspruch 1, **dadurch gekennzeichnet, dass** der innere Dichtungsbereich (7) einen Dichtungsträger (10) sowie eine Dichtung (11) umfasst.

3. Vordralldüsenträger nach einem der Ansprüche 1 oder 2, **dadurch gekennzeichnet, dass** die Vordralldüsen (4) zur Axialrichtung und/oder zu einer Radialebene schräggestellt angeordnet sind.

4. Vordralldüsenträger nach einem der Ansprüche 1 bis 3, **dadurch gekennzeichnet, dass** die Sekundärvordralldüsen (6) zur Axialrichtung und/oder zu einer Radialebene schräggestellt angeordnet sind.

5. Vordralldüsenträger nach einem der Ansprüche 1 bis 4, **dadurch gekennzeichnet, dass** dieser als Gussteil ausgebildet ist.

6. Vordralldüsenträger nach Anspruch 5, **dadurch gekennzeichnet, dass** die Vordralldüsen (4) als gegossene Ausnehmungen ausgebildet sind.

7. Vordralldüsenträger nach einem der Ansprüche 1 bis 6, **dadurch gekennzeichnet, dass** die Sekundärvordralldüsen (6) als gegossene Ausnehmungen ausgebildet sind.

8. Vordralldüsenträger nach einem der Ansprüche 1 bis 7, **dadurch gekennzeichnet, dass** der Dichtungsträger (10) über einen Passsitz (2) am Hauptträger (3) zentriert ist.

9. Vordralldüsentrager nach einem der Ansprüche 1 bis 8, **dadurch gekennzeichnet, dass** die Sekundärvordralldüsen (6) in Radialrichtung in mehreren Reihen angeordnet sind.

## Claims

1. Swirl nozzle carrier for an aircraft gas turbine with a body (1) which is provided with a fitted seat (2) for the location of the swirl nozzle carrier on a non-rotating main carrier (3) and which features several swirl nozzles (4), **characterized in that** the body (1) is extended radially inward, that it features several secondary swirl nozzles (6) on its radial inward area (5) which, together with the swirl nozzles (4) issue into a common disk pre-chamber (12) and that the body (1) is provided with a sealing area (7) on its inner radial side, that the body (1) for the formation of an axially small-sized, smooth-walled disk pre-chamber comprises a wall (9) which extends to a turbine disk front wall (8) and essentially in a radial plane and is essentially smooth at its side facing to the turbine disk front wall (8), and **in that** the secondary swirl nozzles (6) are arranged radially inwards and at a small axial distance to the turbine disk front wall (8).

2. Swirl nozzle carrier in accordance with Claim 1, **characterized in that** the inner sealing area (7) comprises both a seal carrier (10) and a seal (11).

3. Swirl nozzle carrier in accordance with one of the Claims 1 or 2, **characterized in that** the swirl nozzles (4) are oblique to the axial direction and/or a radial plane.

4. Swirl nozzle carrier in accordance with one of the Claims 1 to 3, **characterized in that** the secondary swirl nozzles (6) are oblique to the axial direction and/or a radial plane.

5. Swirl nozzle carrier in accordance with one of the Claims 1 to 4, **characterized in that** the swirl nozzle carrier is produced by a casting process.

6. Swirl nozzle carrier in accordance with Claim 5, **characterized in that** the swirl nozzles (4) are made as cast recesses.

7. Swirl nozzle carrier in accordance with one of the Claims 1 to 6, **characterized in that** the secondary swirl nozzles (6) are made as cast recesses.

8. Swirl nozzle carrier in accordance with Claim 1 to 7, **characterized in that** the seat carrier (10) is centered on the main carrier (3) by means of a fitted seat.

9. Swirl nozzle carrier in accordance with Claim 1 to 8, **characterized in that** the secondary swirl nozzles (6) are arranged in several rows in the radial direction.

## Revendications

1. Support de tuyères de tourbillonnement pour une turbine à gaz destinée à l'aéronautique, avec un corps de base (1) qui est muni d'un ajustement de précision (2) pour loger le support de tuyères de tourbillonnement dans un support principal (3) non rotatif et présente plusieurs tuyères de tourbillonnement (4),
**caractérisé en ce**
**que** le corps de base (1) est constitué d'une seule pièce et formé en se prolongeant radialement vers l'intérieur, présente dans sa zone radiale intérieure (5) plusieurs tuyères de tourbillonnement secondaires (6) qui, avec les tuyères de tourbillonnement (4), débouchent dans une préchambre à disque (12) commune, le corps de base étant muni d'une zone de colmatage intérieure (7) sur son côté radial intérieur ; que le corps de base (1) comprend une paroi (9) s'étendant vers une paroi avant de disque de turbine (8) pour former une préchambre à disque de faible dimension dans le sens axial et à parois lisses, qui s'étend pour l'essentiel dans un plan radial et dont le côté orienté vers la paroi avant du disque de turbine (8) est lisse pour l'essentiel, et que les tuyères de tourbillonnement secondaires (6) sont disposées radialement à l'intérieur et à une faible distance axiale de la paroi avant du disque de turbine (8).

2. Support de tuyères de tourbillonnement selon la revendication nº 1, **caractérisé en ce que** la zone de colmatage intérieure (7) comprend un support de garniture (10) et une garniture (11).

3. Support de tuyères de tourbillonnement selon une des revendications 1 ou 2, **caractérisé en ce que** les tuyères de tourbillonnement (4) sont disposées en biais par rapport au sens axial et/ou à un plan radial.

4. Support de tuyères de tourbillonnement selon une des revendications 1 à 3, **caractérisé en ce que** les tuyères de tourbillonnement secondaires (6) sont disposées en biais par rapport au sens axial et/ou à un plan radial.

5. Support de tuyères de tourbillonnement selon une des revendications 1 à 4, **caractérisé en ce que** qu'il est formé par une pièce moulée en fonte.

6. Support de tuyères de tourbillonnement selon la revendication nº 5, **caractérisé en ce que** les tuyères de tourbillonnement (4) sont formées par des évidements obtenus par moulage.

7. Support de tuyères de tourbillonnement selon une des revendications 1 à 6, **caractérisé en ce que** les tuyères de tourbillonnement secondaires (6) sont formées par des évidements obtenus par moulage.

8. Support de tuyères de tourbillonnement selon une des revendications 1 à 7, **caractérisé en ce que** le support de garniture (10) est centré sur le support principal (3) par un ajustement de précision (2).

9. Support de tuyères de tourbillonnement selon une des revendications 1 à 8, **caractérisé en ce que** les tuyères de tourbillonnement secondaires (6) sont disposées en plusieurs rangées dans le sens radial.
